(19) Europäisches Patentamt
European Patent Office
Office européen des brevets

(11) **EP 3 093 970 B1**

## (12) EUROPEAN PATENT SPECIFICATION

(45) Date of publication and mention
of the grant of the patent:
**11.12.2019 Bulletin 2019/50**

(21) Application number: **14828118.1**

(22) Date of filing: **10.01.2014**

(51) Int Cl.:
*H02M 7/5387* (2007.01)    *H02M 1/32* (2007.01)
*H02M 7/00* (2006.01)    *H02M 5/458* (2006.01)

(86) International application number:
**PCT/JP2014/050269**

(87) International publication number:
**WO 2015/104825 (16.07.2015 Gazette 2015/28)**

(54) **ELECTRIC POWER CONVERSION DEVICE**

STROMWANDLER

DISPOSITIF DE CONVERSION D'ALIMENTATION ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.11.2016 Bulletin 2016/46**

(73) Proprietor: **Hitachi Industrial Equipment Systems
Co., Ltd.
Chiyoda-ku
Tokyo 101-0022 (JP)**

(72) Inventors:
• **IBORI, Satoshi
Tokyo 101-0022 (JP)**
• **SASAKI, Yasushi
Tokyo 101-0022 (JP)**
• **TOMIYAMA, Kiyotaka
Tokyo 101-0022 (JP)**

(74) Representative: **Strehl Schübel-Hopf & Partner
Maximilianstrasse 54
80538 München (DE)**

(56) References cited:
WO-A2-2009/043186    JP-A- 2009 011 117
JP-A- 2011 036 016    US-A1- 2012 163 046

**Description**

Technical Field

The present invention relates to a power converter.

Background Art

In recent years, silicon carbide (SiC) or gallium nitride (GaN) attracts attention as a wide bandgap semiconductor element having properties to overcome property value limits of silicon (Si) and is expected to be a power semiconductor element for future generations.

These materials are semiconductor elements characterized to have, a dielectric breakdown voltage that is substantially ten times as high, thermal conductivity substantially three times as high, a melting point substantially twice as high, and an electron saturated velocity substantially twice as high as that of Si. Particularly, since these materials have a high dielectric breakdown voltage, it is possible for a drift layer for securing a dielectric strength voltage to become thinner up to about a tenth and thus it is possible to decrease an ON-state voltage of a wide bandgap semiconductor.

When these materials configure a power semiconductor, it is expected to be able to greatly decrease an occurrence of loss and further to achieve a great miniaturization of a power converter when compared to an IGBT (silicon) which is a representative power semiconductor element in the related art.

PTL 1 (JP-A-6-121461) discloses that "a short-circuit current protection element is provided on each arm of an inverter, detects a short-circuit fault of a switching element that configures the inverter, turns off the switching elements on every arm of the inverter, then turns off the switching elements on the arms opposite to the arm to which the switching element having the short-circuit fault with respect to a load is connected, and then turns on the switching elements on the remaining arms positioned on the side on which the switching element having the short-circuit fault is positioned.

Citation List

Patent Literature

PTL 1: JP-A-6-121461

US 2012/163046 A1 discloses a power converter with the features in the pre-characterising portion of Claim 1. The use of reactor-diode combination for protecting inverters against voltage breakdown upon short circuits is disclosed in WO 2009/043186 A2.

Summary of Invention

Technical Problem

A thyristor or a diode element has a characteristic of $I^2t$ (product of current squared times t(times)). Therefore, when a rated current of a fuse is appropriately selected in consideration of fusing characteristics of a fuse which is a short-circuit current protection element, the fuse is first thermally cut when a short circuit occurs and it is possible to protect the element from the short-circuit current.

However, since the switching element such as the IGBT, a MOS-FET, or a JFET does not have the characteristics of the product of current squared times t(time), it is not possible to protect the fuse when a short circuit occurs and, thus, the switching element such as the IGBT, the MOS-FET, or the JFET also breaks down when the fuse is thermally cut. Therefore, the fuse is used for preventing a secondary breakdown. That is, the fuse is not useful for protection, and the element such as IGBT, MOS-FET, or JFET first breaks down.

In addition, in a case where a power converter is configured to have a wide bandgap semiconductor element, since the wide bandgap semiconductor element has a high dielectric breakdown voltage, it is possible for a drift layer for securing a dielectric strength voltage to become thinner up to about a tenth, it is possible to decrease an ON-state voltage of a wide bandgap semiconductor and, thus, a significantly small loss is expected. Meanwhile, for example, a problem arises in that, in a case where an incidence of a load short or the like occurs due to the low ON-state voltage, an extremely high short-circuit current flows and it is not possible to protect the semiconductor element.

Solution to Problem

In order to achieve an object above, the present invention suggests the power converter defined in Claim 1. Further advantageous features are set out in the dependent claims.

Advantageous Effects of Invention

The present invention is effective in that it is possible to provide a highly reliable power converter.

Brief Description of Drawings

[Fig. 1] Fig. 1 is a diagram illustrating a configuration of a power converter according to the present invention.

[Fig. 2] Fig. 2 is a diagram illustrating an example of a safe operation area in a power semiconductor.

[Fig. 3] Fig. 3 is a diagram illustrating an example of an excess current detecting level in the power converter.

[Fig. 4] Fig. 4 shows diagrams illustrating an operation mode and a load short current of a wide bandgap semiconductor switching element of the power converter at an arbitrary time point.

[Fig. 5] Fig. 5 is a diagram illustrating a reflux current after cutting-off of an occurrence of a load short of the power converter.

[Fig. 6] Fig. 6 shows diagrams illustrating a main circuit configuration (first example) of a power converter according to the present invention.

[Fig. 7] Fig. 7 shows diagrams illustrating a main circuit configuration (second example) of a power converter according to the present invention.

[Fig. 8] Fig. 8 shows diagrams illustrating a main circuit configuration (main embodiment) of a power converter according to the present invention.

[Fig. 9] Fig. 9 shows examples of locus charts of a voltage and a current at the time of cutting-off of an occurrence of a load short in the related art.

[Fig. 10] Fig. 10 is a locus chart of a voltage and a current at the time of cutting-off of an occurrence of a load short according to the present invention.

[Fig. 11] Fig. 11 shows diagrams illustrating a main circuit configuration (main embodiment) of a power converter according to the present invention.

[Fig. 12] Fig. 12 shows diagrams illustrating a main circuit configuration (main embodiment) of a power converter according to the present invention.

Description of Embodiments

Example 1

Hereinafter, the present application will be described with reference to the drawings. Common configurations in each drawing are represented by the same reference numbers. In addition, the present application is not limited to the examples illustrated in the drawings.

Hereinafter, an aspect of Example 1 of a power converter according to the present application is described with reference to the drawings.

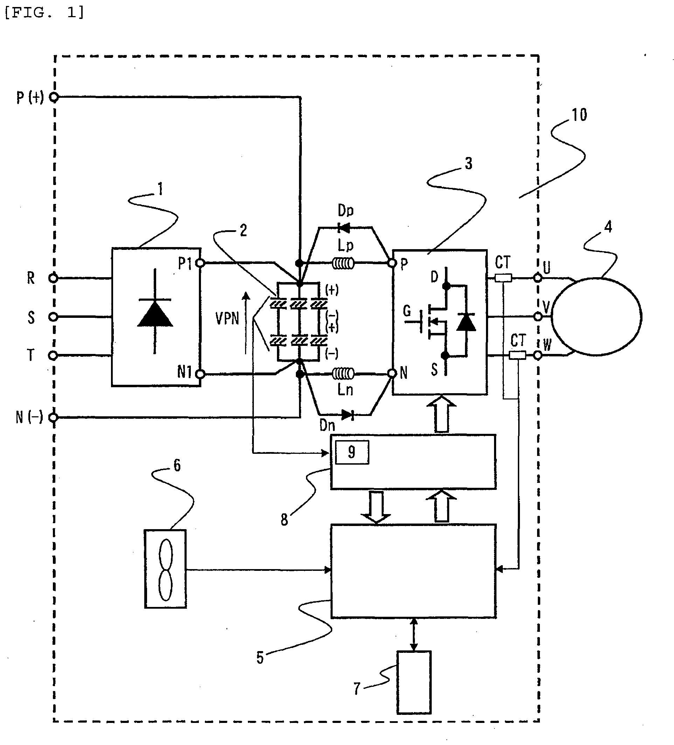

Fig. 1 is a diagram illustrating a configuration of the power converter according to the present invention.

A power converter 10 illustrated in Fig. 1 includes an converter 1 for supplying power to an AC machine, a smoothing capacitor 2, an inverter 3, a control circuit 5, a cooling fan 6, a digital operation panel 7, a driver circuit 8, a voltage detecting circuit 9, a reflux diode (fly wheel diode) Dp that is connected in parallel to a first reactor Lp, and a reflux diode Dn that is connected in parallel to a second reactor Ln.

Fig. 1 illustrates a case where an AC power source is used as an arbitrary power source.

The converter 1 converts AC power into DC power.

The smoothing capacitor 2 is provided on a DC intermediate circuit.

The inverter 3 converts the DC power into AC power with an arbitrary frequency. An SiC-MOSFET having each electrode of a drain (D), a source (S), and a gate (G) is mounted as a representative wide bandgap semiconductor switching element on the inverter 3.

Here, the switching element is not limited to the SiC-MOSFET, but any type of the wide bandgap semiconductor switching element may be used.

The first reactor and the second reactor perform control of an anomalous current at the time of an arm short or a load short.

A volume of the reactor becomes larger in proportion to sizes of the rated current and an inductance value.

In order to achieve a miniaturized power converter, it is desirable that the reactor is small in volume in terms of the disposition area in the power converter.

According to the present example, the power converter is configured to have the first reactor Lp and the second reactor Ln which are small in volume. For example, since the inductance values of the first reactor Lp and the second reactor Ln are about a half of a value obtained in a case of using only the first reactor Lp, it is possible to miniaturize the reactor, and further the power converter is miniaturized effectively.

According to the present example, a case where a plurality of reactors are provided is described, but a configuration which includes any one of the first reactor or the second reactor does not depart from the intention of the invention.

In addition, the reactor may be an iron-core reactor or an air-core reactor without magnetic saturation.

The cooling fan 6 cools a power module in the converter 1 and the inverter 3.

The digital operation panel 7 performs setting and changing of various items of control data, an abnormal state, and display on a monitor of the power converter. A display section on which the abnormal state can be displayed is provided on the operation panel 7 and, when an abnormality is detected in the power converter, the abnormality is displayed on the display section. There is no particular limitation to the operation panel 7 according to the present example, and the digital operation panel is configured taking into account user operability such that the user performs operation while watching the display on the display section.

There is no need to configure the display section and the operation panel 7 integrally, but it is desirable that the display section and the digital operation panel 7 are configured integrally such that the operator of the operation panel 7 can perform operating while watching the display.

The various items of the control data of the power converter input from the operation panel 7 is stored into a storage unit (not illustrated).

The control circuit 5 controls the wide bandgap semiconductor switching element of the inverter 3 on the basis of the various items of control data input through the digital operation panel 7 and performs operation of entire control of the power converter 10. A microcomputer (control computation device) is mounted on the control circuit and the control circuit is configured to perform a control process required in accordance with the various items of the control data input through the digital operation panel 7. Although an internal configuration is not illustrated, the microcomputer (control computation device) that performs computation on the basis of information from the data stored in the storage unit in which the various items of the control data are stored is mounted on the control circuit.

The current detector CT detects line currents of a U phase and a W phase of an AC machine. A line current of a V phase is obtained as iv=-(iu+iw) under a current condition (iu+iv+iw=0) . Fig. 1 illustrates an example in which two CTs are used, but three CTs may be used and may detect line currents of the U phase, the V phase, and the W phase.

The driver circuit 8 drives the wide bandgap semiconductor switching element of the inverter 3 on the basis of an instruction from the control circuit 5. A switching regulator circuit (DC/DC converter) is mounted in the driver circuit 8 and DC voltages required for the operation of the power converter are generated and supplied to the configurations.

The voltage detecting circuit 9 detects a DC voltage VPN of a DC intermediate circuit.

The various items of the control data of the power converter can be set and changed through the operation panel 7. In addition, in a case where not AC power source but DC power source is supplied as an arbitrary input power source, the plus side of the DC power source is connected to the P side of the DC terminal and the minus side of the DC power source may be connected to the N side of the DC terminal.

Further, AC terminals R, S, and T are connected to one another, the plus side of the DC power source is connected to a connection point of the AC terminals R, S, and T, and the minus side of the DC power source may be connected to the N side of the DC terminal. On the other hand, the plus side of the DC power source is connected to the P side of the DC power source, the AC terminals R, S, and T are connected to one another, and the minus side of the DC power source may be connected to the connection point of the AC terminals R, S, and T.

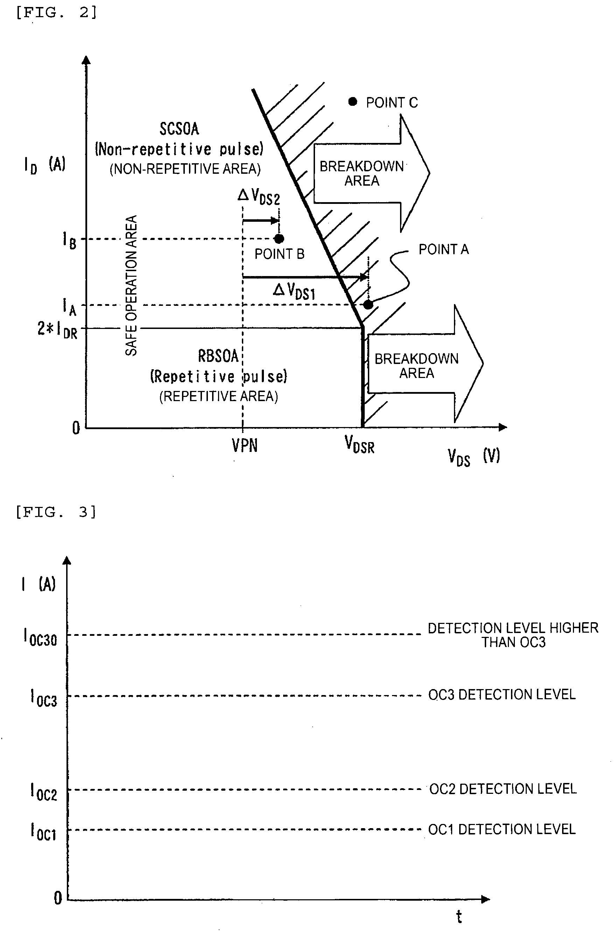

Fig. 2 illustrates an example of a safe operation area in a power semiconductor.

The safe operation area illustrated in Fig. 2 is determined in the power semiconductor and is configured to include a reverse bias safe operation area (RBSOA) and a short circuit safe operation area (SCSOA).

The reverse bias safe operation area is an area of a locus of a current and voltage when the power semiconductor turns off and a normal operation region where repetition is secured.

Meanwhile, the short circuit safe operation area is also referred to as a short-circuit capacity, that is, an area of a locus of a current and voltage during an abnormally excess current state such as an arm short or a load short, and a single occurrence area, that is, a non-repetitive area.

In IGBT (silicon) which is a representative power semiconductor element in the related art, the short-circuit maximum current in the short circuit safe operation area which is the non-repetitive area is five times to six-times the rated current of the IGBT of a dielectric strength voltage class of 600 V and eight times to ten times the rated current of the IGBT of a dielectric strength voltage class of 1200 V.

That is, the IGBT of the dielectric strength voltage class of 600 V means that, in a case where an arm short or load short breakdown occurs, a voltage of about five times to six times the rated current flows in, and in dielectric strength voltage class of 1200 V, a voltage of about eight times to ten times the rated current flows in.

For example, in a product of which the rated current of the IGBT is 100 A with the dielectric strength voltage of 600 V, a short-circuit current of substantially 500 A to 600 A flows. In a product of which the rated current of the IGBT is 100 A with the dielectric strength voltage of 1200 V, a short-circuit current of substantially 800 A to 1000 A flows.

However, for example, in a case of the SiC-MOSFET which is a type of the wide bandgap semiconductor switching element, a semiconductor element has a high dielectric breakdown voltage . Therefore, it is possible for a drift layer for securing the dielectric strength voltage to become thinner up to about a tenth, and an ON-state voltage of the wide bandgap semiconductor is lowered, which causes a short-circuit current of 20 times to 30 times the rated current of the SiC-MOSFET to flow in a case where, for example, the arm short or load short breakdown occurs.

Therefore, a problem arises in that, in a case where such an abnormal short-circuit current is cut off, a significantly soaring voltage (L*dI/dt) is generated, a locus of the current and the voltage exceeds the short circuit safe operation area (SCSOA) (region on the right side in a bold line in Fig. 2), and then the element is caused to be broke down.

For example, in a case of comparing the Si-IGBT and the SiC-MOSFET and a load short occurs under the same condition, in the MOSFET of which the rated current is three times (thirty times/ten times) higher compared to the IGBT, this means that a voltage jump of the MOSFET is also two times to three times higher and it is not possible to protect the element from the breakdown when no plan to remove the influence of the wiring inductance in the power converter is provided.

This is a characteristic of the wide bandgap semiconductor switching element (for example, SiC-MOSFET) significantly different from the Si-IGBT in the related art. Since a switching speed is high, dI/dt is large. When no plan to remove the influence of the wiring inductance in the power converter is provided, a problem arises in that it is not possible to utilize the wide bandgap semiconductor switching element.

Fig. 3 illustrates an example of an excess current detecting level in the power converter.

The current flowing through the AC machine is detected, an excess load restricting function or an excess current control function is performed when the current value is equal to or greater than an $I_{oc1}$ detecting level value, and control for avoiding an excess current trip is performed.

In addition, a current that flows through the AC machine and has a relatively long time constant (gentle rising and falling of current) is detected and, when the current value reaches an $I_{OC2}$ detecting level value, the operation of the power converter is stopped immediately as the excess current trip in order to protect the wide bandgap semiconductor element.

Further, the $I_{OC3}$ detecting level value is a detection current level value for detecting an abnormal current having a short time constant (rising of current dI/dt is steep) such as the arm short or the load short.

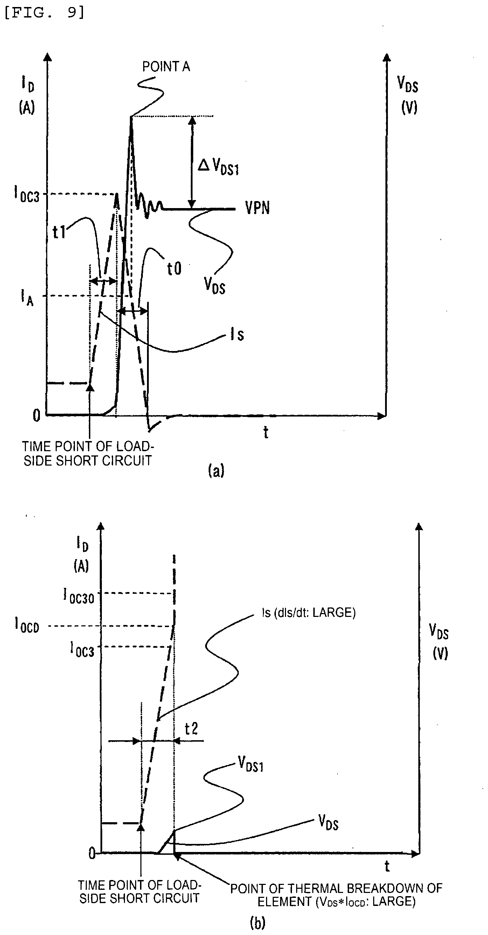

In addition, the $I_{OC30}$ detecting level value is a detection current level value still higher than the $I_{OC3}$ detecting level value. The $I_{OC30}$ detecting level value and the $I_{OC3}$ detecting level value will be described in detail when describing Fig. 9(b).

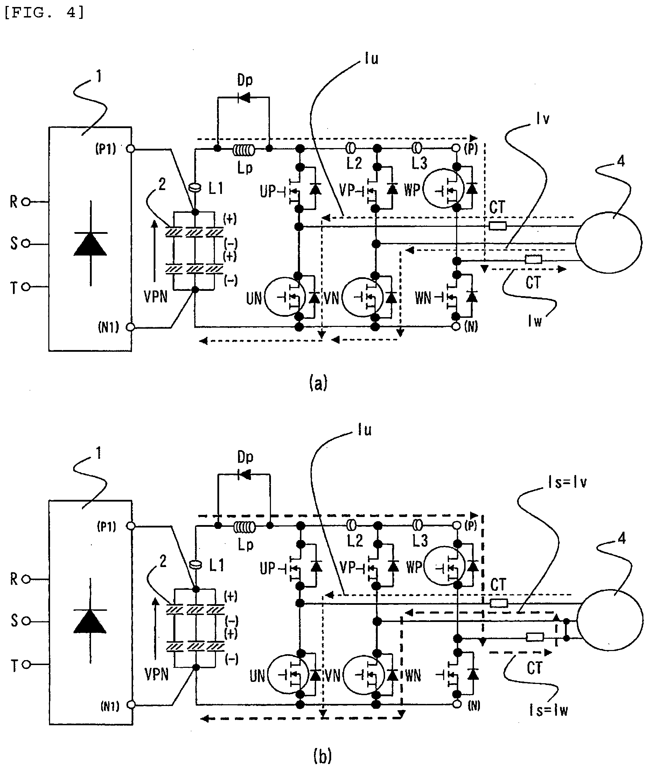

Fig. 4(a) illustrates an operation mode of the wide bandgap semiconductor switching element of the power converter at an arbitrary time point. A wide bandgap semiconductor switching element WP of a W-phase upper arm, a wide bandgap semiconductor switching element UN of a U-phase lower arm, and a wide bandgap semiconductor switching element VN of a V-phase lower arm turn on (wide bandgap semiconductor switching elements surrounded in a circle in the drawing are in the ON-state) and supply respective phase current IU, IV, and IW to the AC machine 4.

Fig. 4 (b) is a diagram illustrating the flow of load short current of the power converter at an arbitrary time point. At the time of operation mode of Fig. 4 (a), in a case where a short circuit occurs in the V phase and the W phase, nearly the entirety of the short-circuit current Is (extremely large current which is 20 times to 30 times the rated current of the wide bandgap semiconductor switching element) flows from the (+) pole of the smoothing capacitor 2 via the wide bandgap semiconductor switching element WP of a W-phase upper arm and a short circuit point, and through a wide bandgap semiconductor switching element VN of a V-phase lower arm toward the (-) pole of the smoothing capacitor 2.

When the short-circuit current Is reaches the $I_{OC3}$ detecting level value, the wide bandgap semiconductor switching elements UP, VP, WP, UN, VN, and WN of all phases are immediately cut off by the drive circuit.

However, in this case, since a cutting-off feature dIs/dt (depending on a switching speed of the semiconductor element) of the short-circuit current Is is determined at an OFF speed t0 of the wide bandgap semiconductor switching element, the high current Is and the extremely high voltage jump $\Delta V_{DS1}$ are applied between the drain (D) and the source (S) of the wide bandgap semiconductor switching element as illustrated in Fig. 9(a), which causes the wide bandgap semiconductor switching element to have the excess voltage breakdown.

Here, a point obtained when a current and a voltage at a point A at which the voltage jump $\Delta V_{DS1}$ has the maximum value are plotted on Fig. 2 is the same point A. The point A in Fig. 2 is present on an outer side area (breakdown area) from the SCSOA area of the wide bandgap semiconductor switching element, which indicates that it is not possible to protect the switching element from the breakdown. This is because the voltage jump $\Delta V_{DS1}$ is generated due to wiring inductance $\Sigma Lpn$ since the wide bandgap semiconductor switching elements UP, VP, WP, UN, VN, and WN of all phases are immediately cut off by the drive circuit when the short-circuit current Is reaches the $I_{OC3}$ detecting level value.

$$\Delta V_{DS1} = (Lp + Ln + \Sigma Lpn) * dIs/dt \qquad \cdots \text{Expression (1)}$$

Fig. 9(a) is a locus chart of the voltage and current of Expression (1) in the short-circuit current detecting value $I_{OC3}$ at the time of cutting-off of an occurrence of the load short.

As a result, $(VPN+\Delta V_{DS1})$ is applied to the wide bandgap semiconductor switching element from which the current is cut off, the current and the voltage are present on an outer side area (point A on the breakdown area in Fig. 2) from the SCSOA area of the wide bandgap semiconductor switching element and thus the wide bandgap semiconductor switching element is in the state of the breakdown.

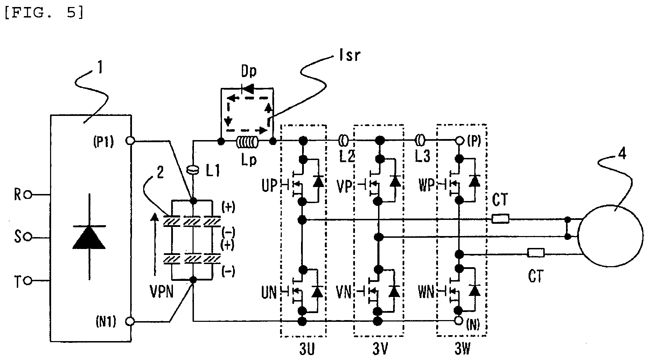

Here, Fig. 5 is a diagram illustrating a reflux current after cutting-off of an occurrence of the load short of the power converter. The first reactor Lp is connected in series between a positive potential (+) side of the smoothing capacitor and a positive potential (+) side of the inverter and the first diode Dp (flayback diode) is connected in parallel to the first reactor.

In the same operation mode as in Fig. 4(b), in terms of the short-circuit current Is which flows in a case where the short circuit occurs in the V phase and the W phase, the maximum value of the short-circuit current Is and a current change rate dIs/dt thereof are suppressed due to a current suppressing effect of the first reactor Lp provided between the positive potential (+) side of the smoothing capacitor and the positive potential (+) side of the inverter, and further, little voltage is applied to the wide bandgap semiconductor switching element because the DC voltage VPN is applied to the first reactor.

When the short-circuit current value reaches the $I_{OC3}$ detecting level value, the wide bandgap semiconductor switching elements UP, VP, WP, UN, VN, and WN of all phases are immediately cut off by the driver circuit 8. Therefore, electromagnetic energy $(Lp*Is^2/2)$ accumulated in the first reactor Lp flows back by the first diode Dp connected in parallel to the first reactor, the short-circuit current is caused to be attenuated by the time constant due to the inductance value and a winding resistance value of the reactor itself, and thereby an operation is performed in which current continuity of the first reactor is secured during the cutting-off.

Since the electromagnetic energy accumulated in the first reactor Lp flows back by the diode Dp, it is possible to cause the voltage jump $(\Delta V_{DS}=Lp*dIs/dt)$ due to the first reactor Lp to be zero.

However, in this case, it is not possible to remove an influence of the voltage jump $(\Delta V_{DS}=\Sigma Lpn*dIs/dt)$ due to the wiring inductance $\Sigma Lpn$ described in Expression (1). For example, in the case of the SiC-MOSFET which is a type of the wide bandgap semiconductor switching element, the short-circuit current flowing at the time of an occurrence of the arm short or load short breakdown becomes 20 times to 30 times the rated current of the SiC-MOSFET when compared to the Si-IGBT in the related art. Therefore, the voltage jump $\Delta V_{DS}$ due to the wiring inductance $\Sigma Lpn$ reaches the breakdown area outside the SCSOA area in Fig. 2, an thus it is not possible to protect the wide bandgap semiconductor element.

This means that in order to utilize the wide bandgap semiconductor switching element with high reliability, a plan to remove the influence of the wiring inductance $\Sigma Lpn$ in the power converter is needed.

In the above description, the wide bandgap semiconductor switching element is in the state of the breakdown at the time of cutting-off (OFF), and there is a thermal breakdown during the ON-state continuity as a single breakdown mode.

A large current flows during the ON-state by a low voltage (saturated voltage) and a high voltage is applied by the low current (leakage current) at the time of the OFF-state to the wide bandgap semiconductor switching element.

However, at the time of the arm short or at the time of the occurrence of the load short, double work burdens are imposed, in which the high voltage (active area) is applied with the large current to the wide bandgap semiconductor switching element. Therefore, when the cutting-off is not performed immediately, a temperature on a chip of the wide bandgap semiconductor switching element exceeds an allowable temperature due to the loss by a product of the large current (short-circuit current flowing to the wide bandgap semiconductor switching element) and the large voltage (voltage applied between the drain and the source of the wide bandgap semiconductor switching element), and the thermal breakdown occurs.

Fig. 9(b) shows a locus chart of the voltage and the current at the time of cutting-off of an occurrence of the load short. When the short-circuit current detecting value $I_{OC30}$ is set to be high ($I_{OC30}>I_{OC3}$) at the time of the occurrence of the load short, time period t2 to the breakdown becomes long (t2 (Fig. 9(b))>t1 (Fig. 9(a))) and, as a result, a loss of the wide bandgap semiconductor switching element chip ($V_{DS}*I_{OCD}$) increases due to a short-circuit current $I_{OCD}$ before reaching the detecting value $I_{OC30}$ level value, the chip temperature Tj of the wide bandgap semiconductor switching element exceeds the allowable temperature Tjmax, and the thermal breakdown occurs in the element. That is, before the abnormal current is detected at the time of the short circuit and the wide bandgap semiconductor switching element is cut off (OFF), the thermal breakdown occurs in the wide bandgap semiconductor switching element due to the loss by the product ($V_{DS}*I_{OCD}$) of the large short circuit current and high voltage during the ON-state. This breakdown mode has a relationship neither with Expression (1) nor with the inner side (safe area) of the SCSOA area in Fig. 2, but is determined depending on load short current $I_{OCD}$, the voltage $V_{DS}$ which is applied between the drain and the source of the wide bandgap semiconductor switching element, and the short circuit time period t2.

In the case of the wide bandgap semiconductor switching element (for example, SiC-MOSFET), the short-circuit current becomes 20 times to 30 times the rated current of the wide bandgap semiconductor element. Therefore, the cutting-off has to be performed within several μ seconds normally. However, when an abnormality detecting circuit is configured to operate at a high speed, a problem arises in that an unnecessary operation is performed even in reaction to a normal conductive external noise. That is, since a malfunction is operated when there is no abnormality, the equipment has to be stopped without a purpose. Therefore, a problem arises in the power converter when the abnormality detecting circuit is configured to operate at a high speed.

The present application is provided by taking into account the above problems, it is possible to control the short-circuit current and the applied voltage which flow in the wide bandgap semiconductor switching element without being configured to have the abnormality detecting circuit operating at a high speed and a specific drive circuit. Therefore, it is possible to also prevent the thermal breakdown during the ON-state continuity before the cutting-off, due to the control effect of the voltage jump at the time of the cutting-off when there is a short circuit breakdown and the control effect of the short-circuit current. In addition, it is possible to protect the wide bandgap semiconductor switching element with high reliability.

Example 2

An aspect of the power converter according to Example 2 of the present application is described with reference to the following drawings.

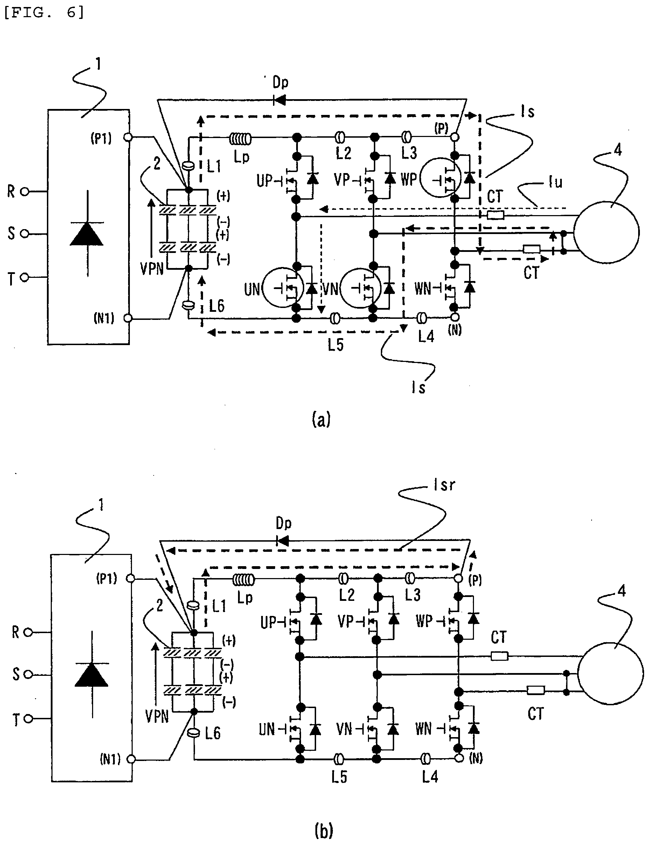

Fig. 6 shows diagrams illustrating a main circuit configuration (first aspect) of the power converter according to the present application.

Fig. 6(a) illustrates an example in which the first reactor Lp is connected in series between the positive potential (+) side of the smoothing capacitor and the positive potential (+) side of the inverter, the cathode side of the first diode Dp is connected to the positive potential (+) side of the smoothing capacitor or to a portion in the vicinity thereof, and the anode side thereof is connected to the positive potential (+) side of the inverter or to a portion in the vicinity thereof, respectively.

For example, in a case where a plurality of the smoothing capacitors are connected in parallel, the respective (+) sides of the plurality of the smoothing capacitors are connected and the respective (-) sides of the smoothing capacitors are connected by using bus bars (copper, aluminum, or the like), respectively. In this case, a place to which the cathode side of the first diode Dp is connected may be the bus bar and, at this time, the positive potential (+) side of the smoothing capacitor, that is, a portion in the vicinity thereof means a bus bar. In addition, in a case where a bus bar is connected from the smoothing capacitor to the wide bandgap semiconductor switching element that configures the inverter or in a case where a plurality of the wide bandgap semiconductor switching elements that configure the inverter are provided, a place to which the first diode Dp is connected may be the bus bar and, at this time, the positive potential (+) side of the inverter, that is, a portion in the vicinity thereof means a bus bar.

Needless to say, the connection place is not limited to the bus bar and the a configuration, in which drawn-out terminals which are drawn out from the positive potential (+) side of the smoothing capacitor or from the positive potential (+) side of the inverter, respectively, are provided and the first diode Dp is connected thereto, does not depart from intention of the present application.

The wide bandgap semiconductor switching element WP of the W-phase upper arm, the wide bandgap semiconductor switching element UN of the U-phase lower arm, and the wide bandgap semiconductor switching element VN of the V-phase lower arm turn on (wide bandgap semiconductor switching elements surrounded in a circle in the drawing are in the ON-state) and supply respective phase current IU, IV, and IW to the AC machine 4.

In terms of the short-circuit current Is which flows in a case where the short circuit occurs in the V phase and the W phase, the maximum value of the short-circuit current Is and a current change rate $dIs/dt$ thereof are suppressed due to a current suppressing effect of the first reactor Lp provided between the positive potential (+) side of the smoothing capacitor and the positive potential (+) side of the inverter, and further, little voltage is applied to the wide bandgap semiconductor switching element because the DC voltage VPN is applied to the first reactor.

When the short-circuit current value reaches the $I_{OC3}$ detecting level value, the wide bandgap semiconductor switching elements UP, VP, WP, UN, VN, and WN of all phases are immediately cut off by the driver circuit 8. Therefore, electromagnetic energy ($\sum L*I^2/2$) accumulated in the reactor Lp and the wiring inductances L1, L2, and L3 flows back by the first diode Dp, and the current continuity is secured during the cutting-off.

Since the electromagnetic energy accumulated in the first reactor Lp and the wiring inductances L1, L2, and L3 flows back by the diode Dp as illustrated in Fig.6 (b), it is possible to cause the voltage jump ($\Delta V_{DS}$= (Lp+L1+L2+L3)*dIs/dt) due to the first reactor Lp and the wiring inductances L1, L2, and L3 to be zero.

That is, the short-circuit current Is flows to the first diode connected in parallel to the first reactor, and is caused to be attenuated by the time constant due to an inductance value and a wiring inductance of the first reactor itself and a winding resistance value and a wiring resistance value of the reactor itself in the power converter. In this way, a reflux mode by the diode is generated without rapid cutting-off of the short-circuit current. Therefore, the influence of the inductance and wiring inductance of the reactor itself provided in the power converter can be removed. Since the voltage jump value can be controlled, without configuring the abnormality detecting circuit that operates at a high speed even at the time of an occurrence of the abnormality such as the arm short or the load short, and without adding a specific circuit to the drive circuit, it is possible to suppress the short-circuit current and the applied voltage flowing through the wide bandgap semiconductor switching element and to protect the wide bandgap semiconductor switching element reliably.

Example 3

An aspect of the power converter according to Example 3 of the present application is described with reference to the following drawings.

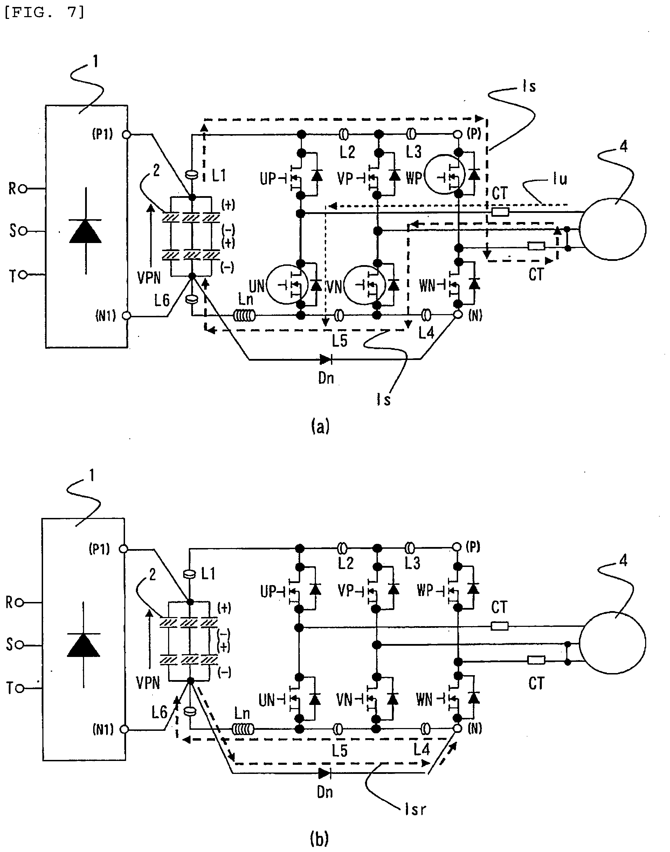

Fig. 7 shows diagrams illustrating a main circuit configuration (second aspect) of the power converter according to the present application.

Fig. 7(a) illustrates an example in which the second reactor Ln is connected in series between the negative potential (-) side of the smoothing capacitor and the negative potential (-) side of the inverter, the anode side of the second diode Dn is connected to the negative potential (-) side of the smoothing capacitor or to a portion in the vicinity thereof, and the cathode side thereof is connected to the negative potential (-) side of the inverter or to a portion in the vicinity thereof, respectively.

Here, the portion in the vicinity thereof indicates the bus bar or the drawn-out terminal which is described in Example 2.

In terms of the short-circuit current Is which flows in a case where the short circuit occurs in the V phase and the W phase, the maximum value of the short-circuit current Is and a current change rate dIs/dt thereof are suppressed due to a current suppressing effect of the second reactor Ln, and further, little voltage is applied to the wide bandgap semiconductor switching element because the DC voltage VPN is applied to the second reactor.

The second diode Dn operates similar to a second diode Dn in Example 4. Since, by this operation, the electromagnetic energy accumulated in the second reactor Ln and the wiring inductances L4, L5, and L6 flows back by the diode Dn, it is possible to cause the voltage jump ($\Delta V_{DS}$= (Ln+L4+L5+L6)*dIs/dt.) due to the second reactor Ln and the wiring inductances L4, L5, and L6 to be zero.

As illustrated in Fig. 7 (b), since a reflux mode by the second diode is generated without rapid cutting-off of the short-circuit current, the influence of the inductance and wiring inductance of the second reactor itself provided in the power converter can be removed. In addition, since the voltage jump value can be controlled, it is possible to suppress the short-circuit current and the applied voltage flowing through the wide bandgap semiconductor switching element even at the time of an occurrence of the abnormality such as the arm short or the load short, and to protect the wide bandgap semiconductor switching element reliably.

Needless to say, in the configurations (the configuration illustrated in Fig. 6(a) is combined with the configuration illustrated in Fig. 7(a)) described in Figs. 6 (a) and 7(a), the first reactor Lp may be connected in series between the positive potential (+) side of the smoothing capacitor and the positive potential (+) side of the inverter, the cathode side of the first diode Dp may be connected to the positive potential (+) side of the smoothing capacitor or to a portion in the vicinity thereof, and the anode side thereof may be connected to the positive potential (+) side of the inverter or to a portion in the vicinity thereof, respectively. In addition, the second reactor Ln may be connected in series between the negative potential (-) side of the smoothing capacitor and the negative potential (-) side of the inverter, the anode side of the second diode Dn may be connected to the negative potential (-) side of the smoothing capacitor or to a portion in the vicinity thereof, and the cathode side thereof may be connected to the negative potential (-) side of the inverter or to a portion in the vicinity thereof, respectively.

Here, the portion in the vicinity thereof indicates a bus bar or a drawn-out terminal which is described in Example 2.

In this case, similar to Example 1, the power converter is configured to have the first reactor Lp and the second reactor Ln which are small in volume, for example. Since the inductance values of the first reactor Lp and the second reactor Ln are about a half of a value obtained in a case (corresponding to Example 2) of using only the first reactor Lp, it is possible to miniaturize the reactor, and further the power converter is miniaturized effectively.

Since a total of the inductance values of the first reactor Lp and the second reactor Ln is the same as in a case of using only the first reactor Lp, similar to Example 2 and Example 3, the maximum value of the short-circuit current Is and the current change rate dIs/dt thereof are suppressed, and further, little voltage is applied to the wide bandgap semiconductor switching element because the DC voltage VPN is applied to the first reactor and the second reactor.

The electromagnetic energy ($\sum L*I^2/2$) accumulated in the first and second reactors Lp and Ln and the wiring inductances L1, L2, L3, L4, L5, and L6 flows back by the first diode Dp and the second diode Dn, and the current continuity is secured during the cutting-off. Since, by this operation, the electromagnetic energy accumulated in the first reactor Lp, the second reactor Ln, and the wiring inductances L1, L2, L3, L4, L5, and L6 flows back by the first diode Dp and the second diode Dn, it is possible to cause the voltage jump ($\Delta V_{DS}$=(Lp+Ln+L1+L2+L3+L4+L5+L6)*dIs/dt) due to the first reactor Lp, the second reactor Ln, and the wiring inductances L1, L2, L3, L4, L5, and L6 to be zero.

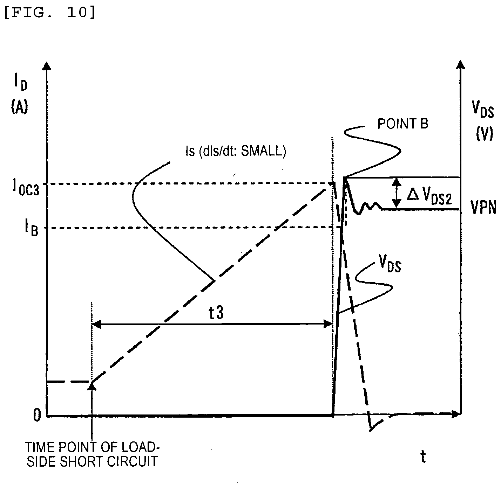

In addition, since it is possible to remove the influence of wiring inductances (L1 to L6) on both the (+) side and the (-) side of the DC intermediate circuit, the present example is effective in that it is possible to further decrease the voltage jump $\Delta V_{DS2}$ at the time of the cutting-off in Fig. 10.

Here, the voltage jump $\Delta V_{DS}$ is estimated by using the wiring inductances under the following conditions.

Wiring inductances $\sum Ln$: (L1+L2+L3+L4+L5+L6)=30 (nH)

Short-circuit current: 30 times*100=3000 (A) (SiC-MOSFET having 100 A of the rated current)

Cutting-off time: 300 (nsec)

$$V_{DS}=L*dIs/dt=30*10^{-9}*3000/(300*10^{-9})=300 \ (V)$$

This voltage becomes the point C in Fig. 2 and is present within the breakdown area of the SCSOA. Therefore, it is not possible to protect the wide bandgap semiconductor switching element.

However, according to the present example, since it is possible to remove the influence of the wiring inductances, it is possible to cause the voltage jump $\Delta V_{DS}$ at the time of the cutting-off to be zero.

In order to utilize the wide bandgap semiconductor switching element, of which the switching speed is high and which has a high short-circuit current, with high reliability compared to the Si-IGBT in the related art, it is understandable that it is important to remove the influence of the wiring inductance in the power converter.

Fig. 10 is a locus chart of the voltage and the current at the time of cutting-off of an occurrence of a load short according to the respective examples of the present application.

During the time period t3 from the time point of an occurrence of the short circuit on the load short side, the maximum value of the short-circuit current Is and the current change rate dIs/dt thereof are suppressed due to the inductance effect of the reactor itself, and further, the DC voltage VPN is applied to the reactor. Therefore, little voltage is applied to the wide bandgap semiconductor switching element. Since, during the period of the short circuit on the load side, the DC voltage VPN is applied to the reactor, the wide bandgap semiconductor switching element operates within the saturated area (state in which the voltage between the drain and source is low) and does not operate in the active area (state in which the voltage between the drain and the source is high). Therefore, even when time period t3 to reaching the short-circuit current detecting value $I_{OC3}$ becomes long (t3 (Fig. 10)>t2 (Fig. 9(b))>t1 (Fig. 9(a)) and, as a result, an increase of a loss of the wide bandgap semiconductor switching element chip ($V_{DS}*I_{OC3}$) is suppressed. Therefore, the chip temperature Tj of the wide bandgap semiconductor switching element does not exceed the allowable temperature, and it is possible to prevent the element from the thermal breakdown. That is, before the abnormal current is detected at the time of the short circuit and the wide bandgap semiconductor switching element is cut off (OFF), it is possible to prevent the wide bandgap semiconductor switching element from the thermal breakdown due to the loss by the product ($V_{DS}*I_{OCD}$) of the large short circuit current and high voltage during the ON-state.

Further, since, through the operation of the first diode Dp or the second diode Dn, the electromagnetic energy accumulated in the first reactor Lp or the second reactor Ln and the wiring inductances L1 to L3, or the wiring inductances L4 to L6 flows back by the first diode Dp or the second diode Dn, it is possible to cause the voltage jump (for example, $\Delta V_{DS2}$=(Lp+Ln+L1+L2+L3+L4+L5+L6)*dIs/dt) due to the reactor, and the wiring inductances to be zero. Since the reflux mode by the diode is generated without rapid cutting-off of the short-circuit current, the influence of the inductance and wiring inductance of the reactor itself provided in the power converter can be removed. In addition, since the voltage jump value can be controlled, it is possible to protect the wide bandgap semiconductor switching element reliably even at a time of cutting-off (OFF) after reaching the short-circuit current detecting value $I_{OC3}$.

When $\Delta V_{DS1}$ in Fig. 9 (a) is compared to $\Delta V_{DS2}$ in Fig. 10, a relationship of $\Delta V_{DS2}<\Delta V_{DSI}$ becomes obvious.

That is, according to the present example, it is possible to also prevent the thermal breakdown during the ON-state continuity before the cutting-off, due to the control effect of the voltage jump at the time of the cutting-off when there is a short circuit breakdown and the control effect of the short-circuit current. In addition, it is possible to protect the wide bandgap semiconductor switching element with high reliability.

Main embodiment

An aspect of the power converter according to the main embodiment of the present application is described with reference to; the following drawings.

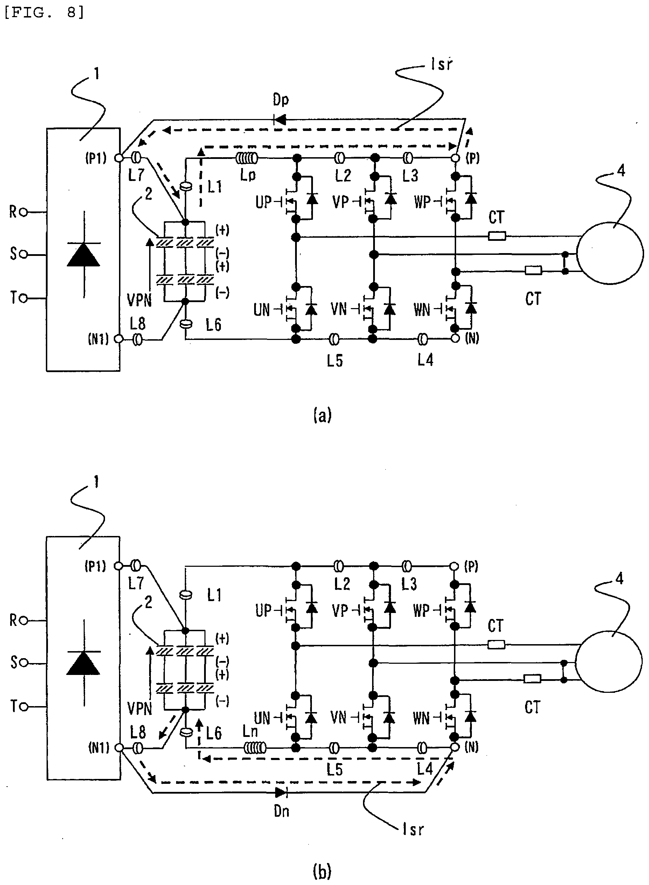

Fig. 8 shows diagrams illustrating a main circuit configuration of the power converter according! to the present application.

Fig. 8(a) illustrates an example in which the first reactor Lp is connected in series between the positive potential (+) side of the smoothing capacitor and the positive potential (+) side of the inverter, the cathode side of the first diode Dp is connected to a positive potential (P1) side of the converter 1 or to a portion in the vicinity thereof, and the anode side thereof is connected to the positive potential (P) side of the inverter or to a portion in the vicinity thereof, respectively. Here, the portion in the vicinity thereof indicates the bus bar or the drawn-out terminal which is described in Example 2.

Nearly entire of the short-circuit current Is (extremely large current which is 20 times to 30 times the rated current of the wide bandgap semiconductor switching element) flows from the (+) pole of the smoothing capacitor 2 through the wide bandgap semiconductor switching element WP of the W-phase upper arm and a short circuit point, and via the wide bandgap semiconductor switching element VN of a V-phase lower arm toward the (-) pole of the smoothing capacitor 2. At this time, a charging current is supplied from the positive potential (P1) side of the converter 1 to the (+) pole of the smoothing capacitor 2 and then returns to a power source through a negative potential (N1) side of the converter 1.

According to the present embodiment, since, by the operation of the first diode Dp, the electromagnetic energy accumulated in the first reactor Lp and the wiring inductances L1, L2, L3, and L7 flows back by the first diode Dp, it is possible to cause the voltage jump due to the reactor and the wiring inductances to be zero. Since the reflux mode by the diode is generated without rapid cutting-off of the short-circuit current, the influence of the inductance and wiring inductance of the reactor itself provided in the power converter can be removed. In addition, since the voltage jump value can be controlled, it is possible to protect the wide bandgap semiconductor switching element reliably even at a time of cutting-off (OFF) after reaching the short-circuit current detecting value $I_{OC3}$.

Fig. 8(b) illustrates the second reactor Ln connected in series between the negative potential (-) side of the smoothing capacitor and the negative potential (-) side of the inverter, the anode side of the second diode Dn is connected to the negative potential (N1) side of the converter or to a portion in the vicinity thereof, and the cathode side thereof is connected to the negative potential (N) side of the inverter or to a portion in the vicinity thereof, respectively. Here, the portion in the vicinity thereof indicates the bus bar or the drawn-out terminal which is described in Example 2.

According to the present embodiment, since, by the operation of the second diode Dn, the electromagnetic energy accumulated in the second reactor Ln and the wiring inductances L4, L5, L6, and L8 flows back by the second diode Dn, it is possible to cause the voltage jump due to the reactor and the wiring inductances to be zero. Since the reflux mode by the diode is generated without rapid cutting-off of the short-circuit current, the influence of the inductance and wiring inductance of the reactor itself provided in the power converter can be removed. In addition, since the voltage jump value can be controlled, it is possible to protect the wide bandgap semiconductor switching element reliably even at the time of cutting-off (OFF) after reaching the short-circuit current detecting value $I_{OC3}$ -

When both the configurations (the configuration illustrated in Fig. 8(a) is combined with the configuration illustrated in Fig. 8(b)) described in Figs. 8 (a) and 8 (b) are embodied, the influence of both the wiring inductances between the (+) side P1 of the DC intermediate circuit and the inverter 3, and between the (-) side N1 of the DC intermediate circuit and the inverter 3 can be removed. Therefore, it is possible to cause the voltage jump ($\Delta V_{DS}=(Lp+Ln+L1+L2+L3+L7+L4+L5+L6+L8)*dIs/dt$) to be zero.

An aspect of the power converter according to the main embodiment of the present application is described also with reference to the following drawings.

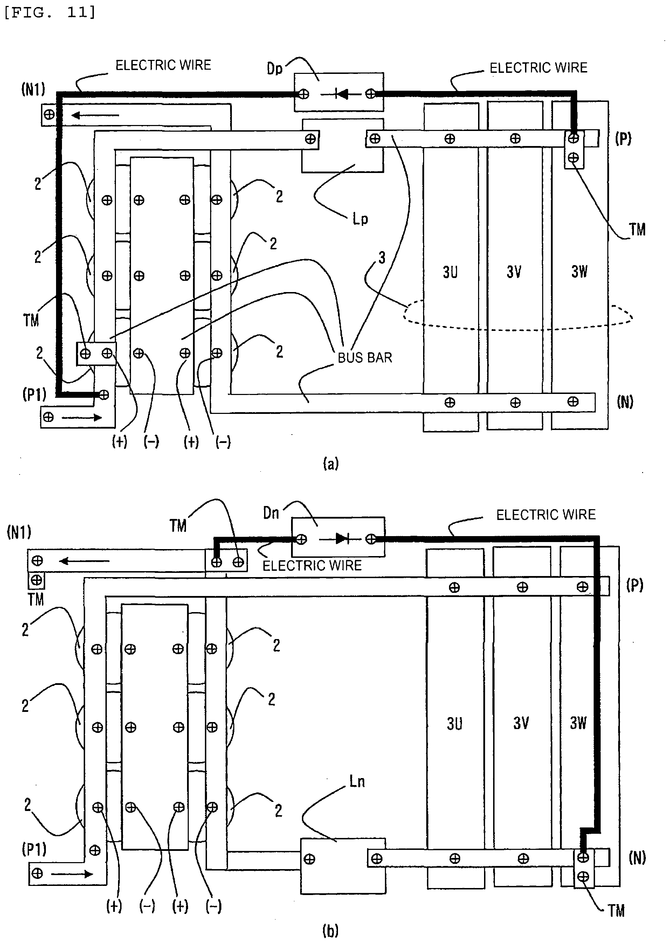

Fig. 11 shows diagrams illustrating a main circuit configuration of the power converter according to the present application.

Fig. 11(a) shows diagrams illustrating an actual connection state between the smoothing capacitor 2, the inverter 3, the first reactor Lp, the first diode Dp, and the bus bar which are illustrated in Fig. 6 (a) according to Example 2.

The same potentials of six smoothing capacitors 2 provided in a serial-parallel arrangement are connected to one another by a bus bar.

As illustrated in Fig. 6(b), in order for the electromagnetic energy accumulated in the reactor Lp and the wiring inductances L1, L2, and L3 to flow back, the cathode side of the diode Dp is connected to the bus in the vicinity of the positive (+) side of the smoothing capacitor 2 which is closer to a positive terminal P1 of the converter 1. The anode side of the diode Dp is connected to a positive terminal P of the inverter 3.

Needless to say, the cathode side of the diode Dp may be connected to the positive potential (+) side of the smoothing capacitor which is closer to the positive terminal P1 of the converter 1 or to a drawn-out terminal TM. In addition, the anode side of the diode Dp may be connected to the drawn-out terminal TM provided in the vicinity of the positive terminal P of the inverter 3.

Fig. 11(b) shows diagrams illustrating an actual connection state between the smoothing capacitor 2, the inverter 3, the second reactor Ln, the second diode Dn, and the bus bar which are illustrated in Fig. 7(a) according to Example 3.

The same potentials of the six smoothing capacitors 2 provided in a serial-parallel arrangement are connected to one another by a bus bar.

As illustrated in Fig. 7(b), in order for the electromagnetic energy accumulated in the reactor Ln and the wiring inductances L4, L5, and L6 to flow back, the anode side of the diode Dn is connected to the bus in the vicinity of the negative (-) side of the smoothing capacitor 2 which is closer to a negative terminal N1 of the converter 1. The cathode side of the diode Dn is connected to a negative terminal N of the inverter 3.

Needless to say, the anode side of the diode Dn may be connected to the negative potential (-) side of the smoothing capacitor which is closer to the negative terminal N1 of the converter 1 or to the drawn-out terminal TM. In addition, the cathode side of the diode Dn may be connected to the drawn-out terminal TM provided in the vicinity of the negative terminal N of the inverter 3.

An aspect of the power converter according to the main embodiment of the present application is described with reference to the following drawings.

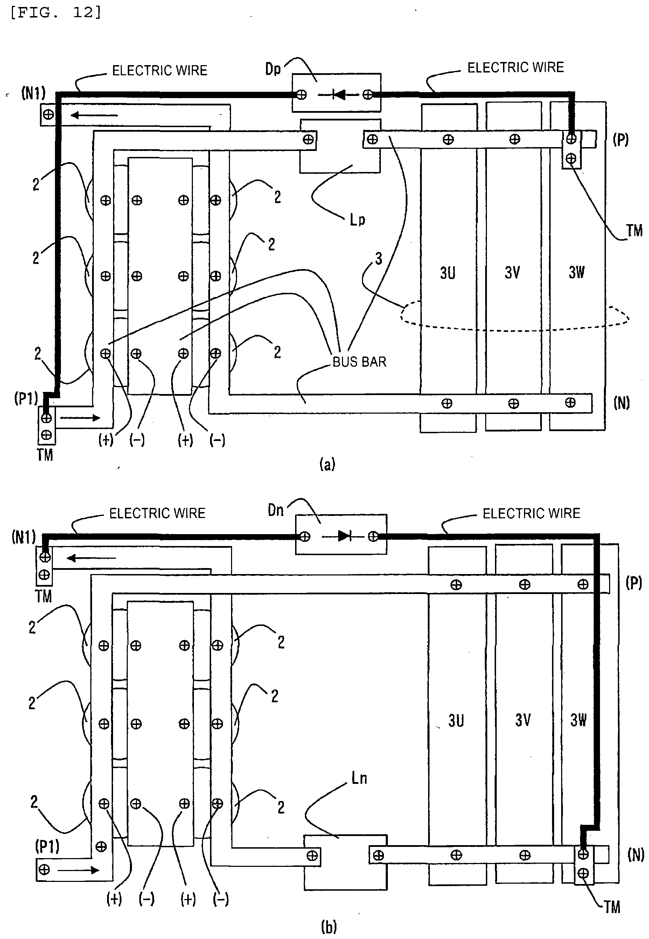

Fig. 12 shows diagrams illustrating a main circuit configuration of the power converter according to the present application.

Fig. 12(a) shows diagrams illustrating an actual connection state between the converter 1, the smoothing capacitor 2, the inverter 3, the first reactor Lp, the first diode Dp, and the bus bar which are illustrated in Fig. 8 (a) .

The same potentials of the six smoothing capacitors 2 provided in a serial-parallel arrangement are connected to one another by a bus bar.

Fig. 12(a) is different from Fig. 11(a) in that the cathode side of the first diode Dp is connected to the positive terminal P1 of the converter 1.

Needless to say, the cathode side of the first diode Dp may be connected to the drawn-out terminal TM provided in the vicinity of the positive terminal P1 of the converter 1. In addition, the anode side of the first diode Dp may be connected to the drawn-out terminal TM provided in the vicinity of the positive terminal P of the inverter 3.

According to the present embodiment, the electromagnetic energy accumulated in the first reactor Lp, the wiring inductances L1, L2, and L3, and the wiring inductance L7 between the positive terminal P1 of the converter 1 and the positive potential (+) of the smoothing capacitor 2 can flow back by the diode Dp.

Therefore, it is possible to remove the influence of the wiring inductances between the (+) side P1 of the DC intermediate circuit and the inverter 3.

Fig. 12(b) shows diagrams illustrating an actual connection state between the converter 1, the smoothing capacitor 2, the inverter 3, the second reactor Ln, the second diode Dn, and the bus bar which are illustrated in Fig. 8(b).

Fig. 12(b) is different from Fig. 11(b) in that the anode side of the second diode Dn is connected to the negative terminal N1 of the converter 1.

According to the present embodiment, the electromagnetic energy accumulated in the second reactor Ln, the wiring inductances L4, L5, and L6 , and the wiring inductance L8 between the negative terminal N1 of the converter 1 and the negative potential (-) of the smoothing capacitor 2 can flow back by the second diode Dn.

Therefore, it is possible to remove the influence of the wiring inductances between the (-) side N1 of the DC intermediate circuit and the inverter 3.

When both configurations (the configuration illustrated in Fig. 12(a) is combined with the configuration illustrated in Fig. 12 (b)) described in Figs. 12 (a) and 12 (b) are embodied, the influence of both the wiring inductances between the (+) side P1 of the DC intermediate circuit and the inverter 3, and between the (-) side N1 of the DC intermediate circuit and the inverter 3 can be removed.

Needless to say, the anode side of the diode Dn may be connected to the drawn-out terminal TM provided in the vicinity of the negative terminal N1 of the converter 1.

In this case, since it is possible to remove the influence of both the wiring inductances between the (+) side P1 and (-) side N1 of the DC intermediate circuit and the inverter 3, it is effective to obtain the smallest $\Delta_{DS2}$ in Fig. 10.

As described, the short-circuit current Is flows to the reflux diodes connected in parallel, and is caused to be attenuated by the time constant due to the inductances, wiring inductances, reactors, and wiring resistance in the power converter. In this way, a reflux mode by the diode is generated without rapid cutting-off of the short-circuit current. Therefore, the influence of the reactors and wiring inductances provided in the power converter can be removed. Since the voltage jump value can be controlled, without configuring the abnormality detecting circuit that operates at a high speed even at the time of an occurrence of the abnormality such as the arm short or the load short, and without adding a specific circuit to the drive circuit, it is possible to suppress the short-circuit current and the applied voltage flowing through the wide bandgap semiconductor switching element and to protect the wide bandgap semiconductor switching element reliably from both breakdown modes of breakdown at the time of the thermal breakdown and the cutting-off (OFF) during an ON-state continuity of the wide bandgap semiconductor switching element, and it is effective to provide the highly reliable power converter.

The object of the present application is to sufficiently utilize merits of low loss of the element in the power converter configured to use the wide bandgap semiconductor switching element, to remove the influence of the wiring inductance in the power converter without adding a specific circuit to the drive circuit even in a case where the arm short circuit, load short breakdown, or the like occurs, to suppress the voltage jump of L*di/dt due to the high switching speed of the element, and to protect the element with high reliability.

Reference Signs List

1 ··· converter
2 ··· smoothing capacitor
3 ··· inverter
4 ··· AC machine
5 ... control circuit
6 ··· cooling fan
7 ··· digital operation panel
8 ··· driver circuit
9 ... DC voltage detecting circuit
10 ··· power converter
VPN ··· DC voltage
CT ··· current detector
Lp ··· reactor provided on P side of DC bus
Ln ··· reactor provided on N side of DC bus
L1, L2, L3, L7 ··· wiring inductance on P side of DC bus
L4, L5, L6, L8 ··· wiring inductance on N side of DC bus
Lpn ··· wiring inductance on P side and N side of DC bus
Dp ··· reflux diode provided on P side and N side of DC bus
Dn ··· reflux diode provided on N side of DC bus
TM ··· drawn-out terminal
t ··· time
RBSOA ··· reverse bias safe operation area
SCSOA ... short circuit safe operation area
* ··· multiplication operator
$^2$ ··· square operator

**Claims**

1. A power converter comprising:

   a converter (1) configured to convert an AC voltage into a DC voltage;
   a DC intermediate circuit comprising a smoothing capacitor (2) configured to smooth the DC voltage converted in the converter; and
   an inverter (3) comprising a wide bandgap semiconductor switching element to convert the DC voltage smoothed by the DC intermediate circuit into an AC voltage;
   **characterized by**
   a first reactor (Lp) provided between a positive terminal of the smoothing capacitor and a positive terminal (P) of the inverter,
   a second reactor (Ln) provided between a negative terminal of the smoothing capacitor and a negative terminal (N) of the inverter,
   a first diode (Dp) connected in parallel to the first reactor, and
   a second diode (Dn) connected in parallel to the second reactor,
   wherein a cathode side of the first diode is connected to a positive terminal (P1) of the converter or to a bus bar comprised in the converter and connected to the positive terminal of the converter, and an anode side of the first diode is connected to the positive terminal of the inverter or to a bus bar comprised in the inverter and connected to the positive terminal of the inverter
   wherein an anode side of the second diode is connected to a negative terminal (N1) of the converter or to a bus bar comprised in the converter and connected to the negative terminal of the converter, and a cathode side of the second diode is connected to the negative terminal of the inverter or to a bus bar comprised in the inverter and connected to the negative terminal of the inverter, and
   wherein the first and second diodes are arranged to, upon cutting-off of a short-circuit current, suppress the influence of wiring inductances between the respective positive and negative terminals of the converter and the inverter and of the inductances of the respective first and second reactors and thus to minimize a corresponding voltage jump value.

2. The power converter according to claim 1,
   wherein the bus bar is formed of copper or aluminum.

**Patentansprüche**

1. Stromwandler, umfassend:

   einen Wandler (1), der dazu eingerichtet ist, eine Wechselstromspannung in eine Gleichstromspannung zu wandeln;
   eine Gleichstromzwischenschaltung, die einen Glättungskondensator (2) umfasst, der dazu eingerichtet ist, die im Wandler gewandelte Gleichstromspannung zu glätten; und
   einen Inverter (3), der ein Halbleiterschaltelement mit großer Bandlücke zum Wandeln der von der Gleichstromzwischenschaltung geglätteten Gleichstromspannung in eine Wechselstromspannung umfasst;
   **gekennzeichnet durch**
   einen ersten Induktor (Lp), der zwischen einem positiven Anschluss des Glättungskondensators und einem positiven Anschluss (P) des Inverters vorgesehen ist,
   einen zweiten Induktor (Ln), der zwischen einem negativen Anschluss des Glättungskondensators und einem negativen Anschluss (N) des Inverters vorgesehen ist,
   eine erste Diode (Dp), die parallel zum ersten Induktor geschaltet ist, und
   eine zweite Diode (Dn), die parallel zum zweiten Induktor geschaltet ist,
   wobei eine Kathodenseite der ersten Diode mit einem positiven Anschluss (P1) des Wandlers oder einer im Wandler vorhandenen Stromschiene verbunden ist und mit dem positiven Anschluss des Wandlers verbunden ist, und eine Anodenseite der ersten Diode mit dem positiven Anschluss des Inverters oder einer im Inverter vorhandenen Stromschiene verbunden ist und mit dem positiven Anschluss des Inverters verbunden ist,
   wobei eine Anodenseite der zweiten Diode mit einem negativen Anschluss (N1) des Wandlers oder einer im Wandler vorhandenen Stromschiene verbunden ist und mit dem negativen Anschluss des Wandlers verbunden ist, und eine Kathodenseite der zweiten Diode mit dem negativen Anschluss des Inverters oder einer im Inverter vorhandenen Stromschiene verbunden ist und mit dem negativen Anschluss des Inverters verbunden ist, und
   wobei die erste und die zweite Diode so angeordnet sind, dass sie beim Abschalten eines Kurzschlussstroms den Einfluss von Leitungsinduktivitäten zwischen den jeweiligen positiven und negativen Anschlüssen des Wandlers und des Inverters und von Induktivitäten der jeweiligen ersten und zweiten Induktoren unterdrücken und damit einen entsprechenden Spannungssprungwert minimieren.

2. Stromwandler nach Anspruch 1,
   wobei die Stromschiene aus Kupfer oder Aluminium gebildet ist.

**Revendications**

1. Convertisseur d'alimentation électrique comprenant :

   un convertisseur (1) configuré pour convertir une tension CA en une tension CC;
   un circuit CC intermédiaire comprenant un condensateur de lissage (2) configuré pour lisser la tension CC convertie dans le convertisseur ; et
   un inverseur (3) comprenant un élément de commutation à semi-conducteur à bande interdite large pour convertir la tension CC lissée par le circuit CC intermédiaire en une tension CA ;
   **caractérisé par**
   un premier réacteur (Lp) prévu entre une borne positive du condensateur de lissage et une borne positive (P) de l'inverseur,
   un deuxième réacteur (Ln) prévu entre une borne négative du condensateur de lissage et une borne négative (N) de l'inverseur,
   une première diode (Dp) connectée en parallèle au premier réacteur, et
   une deuxième diode (Dn) connectée en parallèle au deuxième réacteur,
   dans lequel un côté cathode de la première diode est connecté à une borne positive (P1) du convertisseur ou à une barre omnibus comprise dans le convertisseur et connectée à la borne positive du convertisseur, et un côté anode de la première diode est connecté à la borne positive de l'inverseur ou à une barre omnibus comprise dans l'inverseur et connectée à la borne positive de l'inverseur,

dans lequel un côté anode de la deuxième diode est connecté à une borne négative (N1) du convertisseur ou à une barre omnibus comprise dans le convertisseur et connectée à la borne négative du convertisseur, et un côté cathode de la deuxième diode est connecté à la borne négative de l'inverseur ou à une barre omnibus comprise dans l'inverseur et connectée à la borne négative de l'inverseur, et

dans lequel les première et deuxième diodes sont agencées pour, lors de la coupure d'un courant de court-circuit, supprimer l'influence d'inductances de câblage entre les bornes positives et négatives respectives du convertisseur et de l'inverseur et des inductances des premier et deuxième réacteurs respectifs et pour ainsi minimiser une valeur correspondante de saut de tension.

2. Convertisseur d'alimentation électrique selon la revendication 1,
   dans lequel la barre omnibus est constituée de cuivre ou d'aluminium.

[FIG. 1]

[FIG. 2]

[FIG. 3]

[FIG. 4]

(a)

(b)

[FIG. 5]

[FIG. 6]

(a)

(b)

[FIG. 7]

(a)

(b)

[FIG. 8]

(a)

(b)

[FIG. 9]

(a)

(b)

[FIG. 10]

[FIG. 11]

(a)

(b)

[FIG. 12]

(a)

(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6121461 A
- US 2012163046 A1

- WO 2009043186 A2